# EUROPÄISCHE PATENTSCHRIFT

(11) **EP 2 047 484 B1**
(45) Veröffentlichungstag und Bekanntmachung des Hinweises auf die Patenterteilung: **29.08.2012**
(21) Anmeldenummer: 07786023.7
(22) Anmeldetag: 09.07.2007
(51) Int. Cl.: H01B 17/26, H01H 85/20, H01H 9/10, H01H 11/00

(54) **ANSCHLUSSSTÜCK ZUM ANBRINGEN AN EINEM SICHERUNGSGEHÄUSE**
CONNECTING PIECE FOR FITTING TO A FUSE HOUSING
ÉLÉMENT DE RACCORDEMENT À UN PORTE-FUSIBLE

(30) Priorität: 31.07.2006 DE 102006036531
(43) Veröffentlichungstag der Anmeldung: 15.04.2009
(73) Patentinhaber: SIEMENS AKTIENGESELLSCHAFT, 80333 München (DE)
(72) Erfinder: ALBERT, Clemens, 63773 Goldbach (DE); HOHMANN, Stefan, 36100 Petersberg (DE); TEICHMANN, Jörg, 63755 Alzenau (DE)
(86) Internationale Anmeldenummer: PCT/EP2007/006191
(87) Internationale Veröffentlichungsnummer: WO 2008/014875

(56) Entgegenhaltungen:
- EP-A- 0 517 295
- EP-A- 0 971 378
- DE-A1- 3 322 557
- DE-A1- 3 915 699

## Beschreibung

In der Energieverteilung werden besonders in der Mittelspannungsebene zur Erfüllung von Schalt- und Schutzaufgaben im elektrischen Verteilungsnetz kompakte gasisolierte Schaltanlagen verwendet. Besonders im Bereich der Sekundärverteilung mit relativ geringen Nennströmen bis max. 1250 A sowie Kurzschlussströmen bis maximal 25 kA sind Schaltanlagen in einer Blockbauform anzutreffen, was bedeutet, dass mehrere Schaltfunktionen wie Lastschalter, Leistungsschalter und Transformatorabzweige in einem einzigen mit in der Regel Schwefelhexafluorid gefüllten Gasbehälter angeordnet sind. Diese Blockbehälter können mittels einer aus dem Gasbehälter herausgeführten Sammelschiene zu einer aus mehreren Schaltfeldern bestehenden größeren Schaltanlage verbunden werden. Auch können mittels einer herausgeführten Sammelschiene Schaltfelder mit einer einzigen Schaltfunktion miteinander verbunden werden. So werden diese Schaltanlagen unterschieden in erweiterbare und nicht erweiterbare Anlagentypen. Neben dem Gasbehälter bestehen diese Schaltanlagen üblicherweise aus der beschriebenen Sammelschiene, aus einem Bereich des Kabelanschlusses sowie bei dem Einsatz von Hochspannungs- /Hochleistungs-Sicherungen aus einem Sicherungsgehäuse bzw. Sicherungsanbau.

Die Siemens-Schaltanlage NX PLUS C benutzt für den Transformatorabzweig beispielsweise einen Sicherungsanbau, der sich im Kabelanschlussraum befindet. Die Durchführungen zum Anschluss des Transformatorkabels befinden sich unterhalb der Sicherungen.

Die vorliegende Erfindung bezieht sich auf ein Anschlussstück mit einem elektrischen Leiter zum Anbringen an einer Gehäusewand eines Sicherungsgehäuses einer elektrischen Schaltanlage und zum elektrischen Durchführen des elektrischen Leiters durch die Gehäusewand. Ein derartiges Anschlussstück ist beispielsweise in der Europäischen Patentschrift EP 0 517 295 gezeigt.

Aus der DE 33 22 557 A1 ist ein drehbarer elektrischer Steckanschluss für eine.Durchführung bekannt.

Von einem solchen Anschlussstück ausgehend liegt der Erfindung die Aufgabe zugrunde, ein konstruktiv besonders einfaches Anschlussstück anzugeben, das ein hohes Maß an Flexibilität beim Einbau des Anschlussstücks in einer elektrischen Schaltanlage zur Verfügung stellt.

Diese Aufgabe wird erfindungsgemäß durch ein Anschlussstück mit den Merkmalen des Anspruchs 1 gelöst. Vorteilhafte Ausgestaltungen des Anschlussstücks sind in Unteransprüchen angegeben.

Danach ist erfindungsgemäß vorgesehen, dass der gehäusewandseitige Anschlussbereich derart symmetrisch ausgestaltet ist, dass bei der Montage des Anschlussstücks an einer Gehäusewand zumindest zwei unterschiedliche Ausrichtungen des Anschlussstücks durch Drehen um eine Achse senkrecht zur Gehäusewand möglich sind, wobei das Anschlussstück zwischen seinem gehäusewandseitigen Anschlussbereich und seinem weiteren Anschlussbereich einen Befestigungsbereich aufweist, der eine Befestigung des Anschlussstücks mit einem außerhalb des Sicherungsgehäuses angeordneten (externen) Befestigungsmittel ermöglicht.

Ein wesentlicher Vorteil des erfindungsgemäßen Anschlussstücks ist darin zu sehen, dass eine sehr flexible Montage des Anschlussstücks möglich ist, und zwar angepasst an den vorhandenen freien Platz in der elektrischen Schaltanlage. Aufgrund der erfindungsgemäß vorgesehenen zumindest zwei unterschiedlichen Ausrichtungsmöglichkeiten beim Einbau des Anschlussstücks ist es nämlich möglich, von einer zunächst vorgesehenen Einbauposition für das Anschlussstück flexibel abzuweichen und eine andere Einbauposition zu wählen, wenn sich diese andere Einbauposition im konkreten Fall als geeigneter herausstellt. Ein solcher Befestigungsbereich kann beispielsweise eine Nut aufweisen, die ringförmig, zumindest in einem Ringabschnitt, um den elektrischen Leiter herum angeordnet ist.

Gemäß einer besonders bevorzugten Ausführungsform ist vorgesehen, dass der gehäusewandseitige Anschlussbereich rotationssymmetrisch ausgestaltet ist und bei der Montage des Anschlussstücks an der Gehäusewand eine beliebige Ausrichtung des Anschlussstücks durch Drehen um die Achse senkrecht zur Gehäusewand möglich ist. Bei dieser Variante ist eine noch größere Flexibilität beim Einbau möglich, weil quasi beliebig viele Positionierungen des Anschlussstücks relativ zum Sicherungsgehäuse möglich sind.

Ein besonders einfacher und kostengünstiger Aufbau des Anschlussstücks wird erreicht, wenn der Anschlussbereich einen Flanschbereich aus elektrisch isolierendem Material zur Auflage einer ringförmigen Dichtscheibe aufweist und wenn der elektrische Leiter an seinem gehäusewandseitigen Leiterende einen vom Flanschbereich herausstehenden Bolzen mit einem Innen- oder Außengewinde beispielsweise zur Aufnahme einer Befestigungsschraube oder Befestigungsmutter aufweist.

Vorzugsweise ist der Bolzen mittig im Flanschbereich angeordnet und derart dimensioniert, dass die ringförmige Dichtscheibe auf den Bolzen aufsteckbar ist.

In dieser Nut kann beispielsweise ein Befestigungsring oder Befestigungsringsegment eingelegt sein, dessen dem elektrischen Leiter zugewandter Innenringbereich eine gewölbte Oberfläche aufweist. Vorzugsweise ist der Befestigungsring oder das Befestigungsringsegment elektrisch leitfähig, und der Krümmungsradius der gewölbten Oberfläche in dem Innenringbereich beträgt vorzugsweise zumindest 1 mm. Bei einer solchen Ausgestaltung des Befestigungsringes bzw. -segments lässt sich nämlich in sehr einfacher Weise eine elektrische Abschirmung zwischen dem elektrischen Leiter des Anschlussstücks und dem externen Befestigungsmittel andererseits erreichen. Durch eine solche Abschirmung lässt sich beispielsweise vermeiden, dass es im Bereich der Nut zu einer elektrischen Feldstärkeerhöhung kommen kann, die eine vorzeitige Materialalterung des Isolationsmaterials hervorruft; dieser Sachverhalt wird weiter unten im Zusammenhang mit den Ausführungsbeispielen noch eingehender erläutert.

Besonders bevorzugt weist der Befestigungsring oder das Befestigungsringsegment einen U-förmigen Querschnitt auf, wobei der Bodenbereich des U-förmigen Querschnitts dem elektrischen Leiter zugewandt und der Öffnungsbereich des U-förmigen Querschnitts dem elektrischen Leiter abgewandt ist.

Das Anschlussstück kann außerdem eine Elektrode enthalten, die einen Bestandteil eines kapazitiven Spannungsteilers bildet. Beispielsweise weist ein solcher kapazitiver Spannungsteiler eine leitfähige Ringelektrode und damit verbundene nichtleitfähige Verbindungselemente auf, die mit dem Befestigungsring oder dem Befestigungsringsegment verbunden sind.

Vorzugsweise weist der Befestigungsring oder das Befestigungsringsegment zumindest einen Anschlussabschnitt mit einem Loch auf, in das eines der nichtleitfähigen Verbindungselemente eingesteckt ist.

Das zumindest eine Loch und die nichtleitfähigen Verbindungselemente sind beispielsweise in ein Isolationsmaterial des Anschlussstücks eingegossen.

Die Elektrode des kapazitiven Spannungsteilers wird bevorzugt räumlich zwischen der Nut und dem elektrischen Leiter angeordnet, damit sie die Nut von dem elektrischen Leiter elektrisch abschirmt.

Der elektrische Leiter des Anschlussstücks kann beispielsweise gerade oder in einem beliebigen Winkel einmal oder mehrmals gekrümmt sein.

Die Erfindung bezieht sich auch auf ein Sicherungsgehäuse, insbesondere einen Sicherungsanbau für eine elektrische Schaltanlage, mit Anschlussdurchführungen, von denen zumindest eine mit einem Anschlussstück, wie es oben beschrieben ist, ausgestattet ist.

Die Erfindung bezieht sich darüber hinaus auch auf eine elektrische Schaltanlage mit einem Sicherungsgehäuse, insbesondere Sicherungsanbau, mit Anschlussdurchführungen, von denen zumindest eine mit einem Anschlussstück, wie oben beschrieben, ausgestattet ist.

Eine solche Schaltanlage weist bevorzugt drei Anschlussdurchführungen auf, nämlich eine abgangsseitige Anschlussdurchführung, an die ein Anschlussstück - wie oben beschrieben - angeschlossen ist, sowie eine vordere und eine hintere Anschlussdurchführung zum Anschluss an einen Anlagenbehälter der Schaltanlage.

Vorzugsweise steilen die vordere oder die hintere Anschlussdurchführung mit der abgangsseitigen Anschlussdurchführung mittels einer Stromschiene elektrisch in Verbindung.

Die vordere oder die hintere Anschlussdurchführung kann beispielsweise einen Erdungskontakt eines Erdungsschalters tragen.

Die Erfindung bezieht sich auch auf ein Verfahren zum Herstellen eines Anschlussstücks, wie es oben beschrieben ist, wobei bei dem Verfahren an dem dem gehäusewandseitigen Leiterende abgewandten anderen Leiterende des elektrischen Leiters ein Adapterstück angebracht wird und der elektrische Leiter gemeinsam mit dem Adapterstück mit dem Isolationsmaterial des Anschlussstücks vergossen wird.

Die Erfindung wird nachfolgend anhand von Ausführungsbeispielen näher erläutert; dabei zeigen beispielhaft:
- Figur 1: ein Ausführungsbeispiel für eine elektrische Schaltanlage mit einem Sicherungsanbau und einem Anschlussstück,
- Figuren 2-5: ein erstes Ausführungsbeispiel für ein erfindungsgemäßes Anschlussstück für die Schaltanlage gemäß Figur 1, wobei das Anschlussstück eine 90°-Krümmung sowie einen Befestigungsring aufweist,
- Figuren 6-9: ein zweites Ausführungsbeispiel für ein erfindungsgemäßes Anschlussstück, wobei bei diesem der elektrische Leiter des Anschlussstücks ungekrümmt ist,
- Figuren 10-13: ein drittes Ausführungsbeispiel für ein erfindungsgemäßes Anschlussstück, bei dem ein Befestigungsbereich durch eine Nut gebildet ist, die durch einen kapazitiven Spannungsteiler vom elektrischen Leiter des Anschlussstücks abgeschirmt ist, und
- Figuren 14-15: ein viertes Ausführungsbeispiel für ein erfindungsgemäßes Anschlussstück, bei dem ein Adapterstück in ein Vergussmaterial des Anschlussstücks eingegossen ist.

In den Figuren werden der Übersicht halber für identische oder vergleichbare Komponenten stets dieselben Bezugszeichen verwendet.

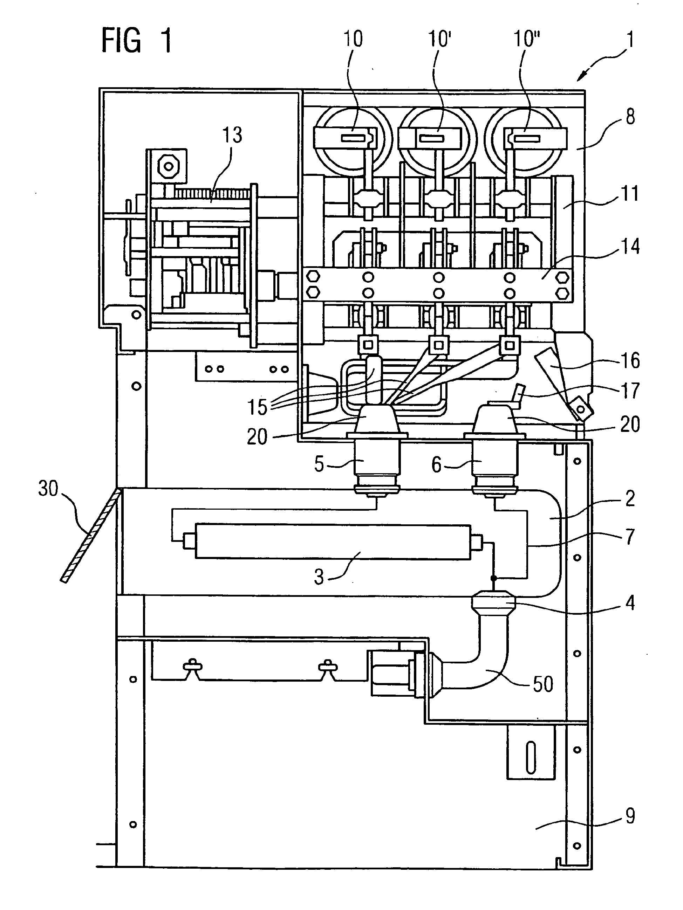

In der Figur 1 erkennt man eine elektrische Schaltanlage 1 mit einem Sicherungsgehäuse in Form eines Sicherungsanbaus 2, der mit einer Sicherung 3 ausgestattet ist. Der Sicherungsanbau 2 weist drei Anschlussdurchführungen auf, nämlich eine abgangsseitige Anschlussdurchführung 4, eine vordere Anschlussdurchführung 5 sowie eine hintere Anschlussdurchführung 6. Die hintere Anschlussdurchführung 6 steht mit der abgangsseitigen Anschlussdurchführung 4 mittels einer Stromschiene 7 in Verbindung.

Oberhalb des Sicherungsanbaus 2 befindet sich ein Anlagenbehälter 8, der beispielsweise gekapselt ausgeführt ist und mit einem Gas, wie beispielsweise SF₆-Gas, gefüllt ist. Unterhalb des Sicherungsanbaus 2 befindet sich ein Kabelanschlussraum 9.

In oder an dem Anlagenbehälter 8 befindet sich eine Vielzahl elektrischer Komponenten, beispielsweise Schaltelemente 10, 10' und 10" sowie weitere Elemente wie ein mechanischer Antrieb des Schaltgeräts, der außerhalb des Anlagenbehälters angeordnet ist, eine Trägerplatte 11 des Schaltgeräts und Erdungskontakte 14 mit Trägerplatte.

Eine elektrische Verbindung der Komponenten 10, 10', 10", 11, 13 und 14 mit dem Sicherungsanbau 2 bzw. dem Kabelanschlussraum 9 erfolgt über Verschienungen 15, die über elektrische Durchführungen 20 mit der vorderen Anschlussdurchführung 5 sowie der hinteren Anschlussdurchführung 6 in Verbindung stehen. Es lässt sich in der Figur 1 darüber hinaus erkennen, dass eine schaltbare Verbindung 16 innerhalb des Anlagenbehälters 8 über einen Schaltkontakt 17 mit der hinteren Anschlussdurchführung 6 verbindbar ist, so dass ein Anschlusskabel im Kabelanschlussraum 9 bzw. ein Anschluss des Sicherungsanbaus 2 innerhalb des Anlagenbehälters 8 geerdet werden kann.

In der Figur 1 lässt sich außerdem ein Verschlussdeckel 30 erkennen, der das Sicherungsgehäuse bzw. den Sicherungsanbau 2 abdeckt und die Sicherung 3 trägt.

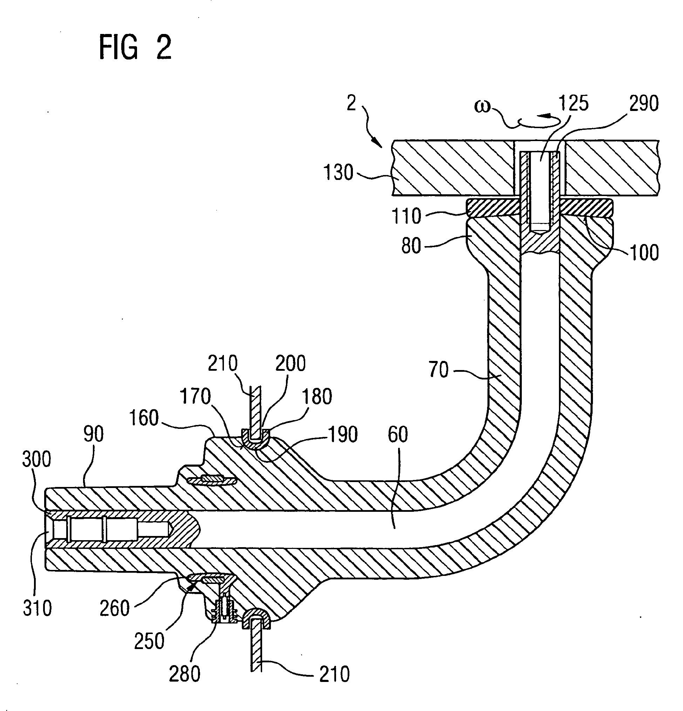

In der Figur 1 lässt sich darüber hinaus erkennen, dass an die abgangsseitige Anschlussdurchführung 4 ein "flexibel" montierbares Anschlussstück angeschlossen ist. Ausführungsbeispiele für das flexibel montierbare Anschlussstück 50 sind in den Figuren 2 bis 15 dargestellt.

In den Figuren 2 bis 4 ist ein erstes Ausführungsbeispiel für das Anschlussstück 50 gemäß Figur 1 dargestellt. Man erkennt einen elektrischen Leiter 60, der eine 90°-Krümmung aufweist und in einem Isolationsmaterial 70 des Anschlussstücks 50 eingegessen ist.

Das Anschlussstück 50 weist einen gehäusewandseitigen Anschlussbereich 80 sowie einen vom gehäusewandseitigen Anschlussbereich 80 beabstandeten und durch den 90° Krümmungsbereich getrennten weiteren Anschlussbereich 90 auf.

Der gehäusewandseitige Anschlussbereich 80 umfasst einen Flanschbereich 100 aus elektrisch isolierendem Material, das durch das Isolationsmaterial 70 gebildet ist. Der Flanschbereich 100 ist derart geformt, dass eine Auflage einer ringförmigen Dichtscheibe 110 möglich ist. Zur Fixierung der ringförmigen Dichtscheibe 110 ist außerdem ein Bolzen 120 vorhanden, der durch ein Ende des elektrischen Leiters 60 gebildet wird und senkrecht, zumindest annähernd senkrecht, zur Oberfläche des Flanschbereichs 100 und damit senkrecht, zumindest annähernd senkrecht, zur ringförmigen Dichtscheibe 110 angeordnet ist.

Der Bolzen 120 weist ein Innengewinde 125 auf, in das eine nicht weiter dargestellte Befestigungsschraube eingeschraubt werden kann. Mit einer solchen Befestigungsschraube lässt sich der Bolzen 120 an einer Gehäusewand 130 des Sicherungsgehäuses 2 der in der Figur 2 nicht weiter dargestellten elektrischen Schaltanlage 1 festschrauben. Wird nämlich eine Befestigungsschraube in das Innengewinde 125 eingeschraubt, so wird der Bolzen 120 in der Figur 2 nach oben gezogen, wodurch der Flanschbereich 100 des Anschlussstücks 50 sowie die ringförmige Dichtscheibe 110 von außen gegen die Gehäusewand 130 des Sicherungsgehäuses 2 gepresst werden und dadurch eine dichte Anbindung des Anschlussstücks 50 an der Gehäusewand 130 erreicht wird.

Wie sich in der Figur 2 erkennen lässt, führt die symmetrische Anordnung des Bolzens 120 relativ zum Flanschbereich 100 dazu, dass der gehäuseseitige Anschlussbereich 80 rotationssymmetrisch ist und damit eine Montage des Anschlussstücks an der Gehäusewand 130 in einer beliebigen Ausrichtung möglich ist, da nämlich das Anschlussstück 50 um die durch den Bolzen 120 gebildete Drehachse gedreht werden kann.

Beim Ausführungsbeispiel gemäß Figur 2 ist ein beliebiger Drehwinkel ω zwischen dem Anschlussstück 50 und der Gehäusewand 130 möglich. Alternativ ist es auch möglich, nur ausgewählte Anschlusswinkel ω zwischen dem Anschlussstück 50 und der Gehäusewand 130 zu erlauben, beispielsweise durch eine entsprechende Formgebung (z. B. mehreckiger Querschnitt: quadratisch, dreieckig, vieleckig) des Bolzens 120 und/oder der Gehäusewandöffnung, in die der Bolzen 120 zur Montage hineingeführt wird.

Wie sich in der Figur 2 darüber hinaus erkennen lässt, ist die ringförmige Dichtscheibe 110 derart dimensioniert, dass sie auf den Bolzen 120 aufsteckbar ist. Vorzugsweise wird das Innenloch der Dichtscheibe 110 derart bemessen, dass es möglichst gut zu dem Außendurchmesser des Bolzens 120 passt, damit ein Verrutschen der Dichtscheibe 110 auf dem Flanschbereich 100 vermieden wird.

In der Figur 2 lässt sich außerdem erkennen, dass zwischen dem gehäusewandseitigen Anschlussbereich 80 und dem weiteren Anschlussbereich 90 ein Befestigungsbereich 160 angeordnet ist, der eine Nut 170 aufweist. In der Nut 170 ist ein Befestigungsring 180 eingelegt oder eingegossen, der im Querschnitt betrachtet U-förmig ist.

Der Bodenbereich 190 des U-förmigen Befestigungsrings 180 ist dem elektrischen Leiter 60 des Anschlussstücks zugewandt. Der Bodenbereich 190 bildet somit einen Innenringbereich mit einer gewölbten Oberfläche, die den elektrischen Leiter 60 des Anschlussstücks 50 einschließt.

Der Befestigungsring 180 weist im Querschnitt betrachtet darüber hinaus einen Öffnungsbereich 200 auf, der dem elektrischen Leiter 60 abgewandt und von außen zugänglich ist. In den Öffnungsbereich 200 des Befestigungsrings 180 kann ein externes Befestigungsmittel 210, beispielsweise in Form einer Montagewand, eingesteckt werden, um das Anschlussstück 50 räumlich zu fixieren. Damit wird es möglich, das Anschlussstück auch außerhalb des Bereichs der Gehäusewand 130 zu befestigen und beispielsweise zu verhindern, dass das Anschlussstück 50 um die durch den Bolzen 120 gebildete Rotationsachse nach der fertigen Montage noch geschwenkt werden kann.

Vorzugsweise besteht der Befestigungsring 180 aus einem elektrisch leitfähigem Material, damit die Ausbildung elektrischer Feldlinien zwischen dem Befestigungsring 180 und dem elektrischen Leiter 60 während des Betriebs des elektrischen Leiters ausschließlich durch die Formgebung des Befestigungsrings 180 bestimmt wird, und nicht durch die Formgestaltung der Ränder des Befestigungsmittels 210, die womöglich scharfkantig ausgeführt sind und aufgrund dieser Formgebung eine elektrische Feldstärkeerhöhung im Befestigungsbereich 160 des Anschlussstücks hervorrufen könnten. Die Funktion des elektrisch leitfähigen Befestigungsrings 180 besteht somit auch darin, das Befestigungsmittel 210 von dem elektrischen Leiter 60 abzuschirmen.

Die dem elektrischen Leiter 60 zugewandte gewölbte Oberfläche des Innenringbereichs bzw. der Bodenbereich 190 des Befestigungsrings 180 weisen vorzugsweise einen Krümmungsradius von zumindest einem Millimeter auf. Durch einen solchen Krümmungsradius wird sehr sicher verhindert, dass es zu einer Feldlinienüberhöhung im Bereich des Befestigungsringes 180 sowie zu einer vorzeitigen Alterung des Isolationsmaterials 70 durch eine erhöhte Feldstärke kommen kann.

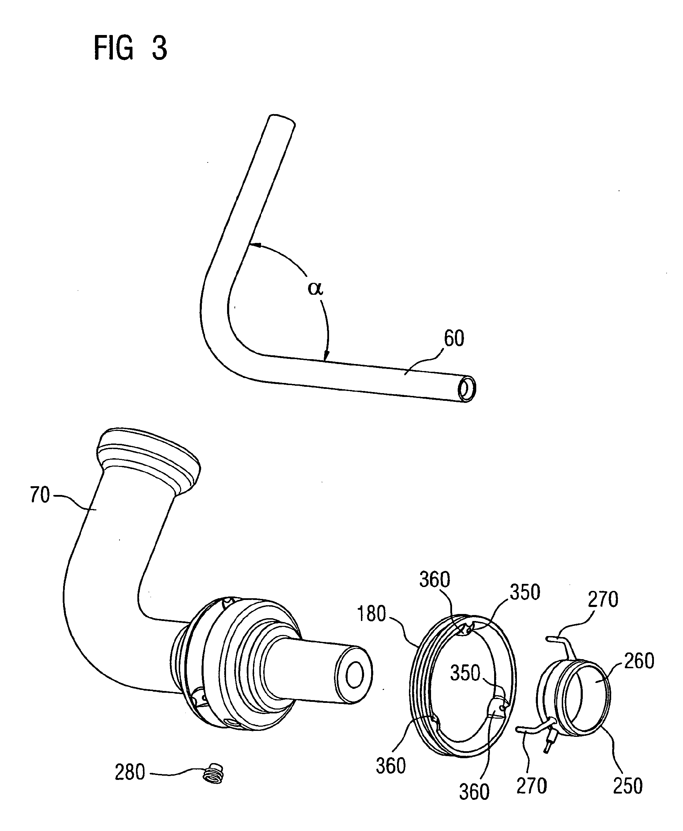

In der Figur 2 ist darüber hinaus erkennbar, dass in dem Anschlussstück 50 ein kapazitiver Spannungsteiler 250 angeordnet ist. Der kapazitive Spannungsteiler 250 weist eine leitfähige Ringelektrode 260 sowie nichtleitfähige Verbindungselemente 270 (vgl. Fig. 3) auf, die mit dem Befestigungsring 180 in Verbindung stehen. Die Verbindung zwischen den nichtleitfähigen Verbindungselementen 270 und dem Befestigungsring 180 ist in der Figur 2 nicht dargestellt und wird im Zusammenhang mit der Figur 3 weiter unten erläutert.

Außerdem ist der kapazitive Spannungsteiler mit einem elektrischen Messanschluss 280 ausgestattet, der mit der leitfähigen Ringelektrode 260 in Verbindung steht und eine kapazitive Spannungsmessung der an dem elektrischen Leiter 60 anliegenden elektrischen Spannung ermöglicht.

Um einen elektrischen Anschluss an den elektrischen Leiter 60 im Bereich des weiteren Anschlussbereichs 90 zu ermöglichen, ist der elektrische Leiter 60 an seinem dem gehäusewandseitigen Leiterende 290 abgewandten anderen Leiterende 300 als Steckerbuchse 310 ausgestaltet, so dass ein Steckelement in die Steckerbuchse von außen einsteckbar oder einschraubbar ist.

In der Figur 3 sind die einzelnen Komponenten des Anschlussstücks 50 gemäß Figur 2 nochmals im Detail dargestellt. Man erkennt den elektrischen Leiter 60 mit seinem 90°-Krümmungsbereich, der in der Figur 3 schematisch durch den Winkel α angedeutet ist.

Darüber hinaus sieht man in der Figur 3 den kapazitiven Spannungsteiler 250 mit seiner leitfähigen Ringelektrode 260 sowie den daran angebundenen nichtleitfähigen Verbindungselementen 270. Die nichtleitfähigen Verbindungselemente 270 werden in Löcher 350 des Befestigungsrings 180 eingesteckt. Der Befestigungsring 180 ist hierzu mit drei Anschlussabschnitten 360 ausgestattet, die jeweils mit einem Loch 350 versehen sind, damit jeweils eines der nichtleitfähigen drei Verbindungselemente 270 in diese eingesteckt werden kann.

Das Isolationsmaterial 70 des Anschlussstücks 50 wird durch ein Vergussmaterial gebildet, in das der elektrische Leiter 60 sowie der Befestigungsring 180 mit dem kapazitiven Spannungsteiler 250 eingegossen sind. Zur Herstellung des Anschlussstücks werden der Befestigungsring 180 und der kapazitive Spannungsteiler 250 zunächst miteinander verbunden, indem die drei nichtleitfähigen Verbindungselemente 270 in die drei Löcher 350 der Anschlussabschnitte 360 des Befestigungsrings 180 eingesteckt werden. Eine elektrische Verbindung zwischen dem Befestigungsring 180 und der elektrisch leitfähigen Ringelektrode 260 tritt dabei nicht auf, da die Verbindungselemente 270 selbst nicht leitfähig sind. Anschließend wird die zusammengesteckte Einheit aus Befestigungsring 180 und kapazitivem Spannungsteiler 250 zusammen mit dem elektrischen Leiter 60 in einer nicht weiter dargestellten Gussform mit dem Isolationsmaterial bzw. Gussmaterial 70 vergossen, wodurch das fertige Anschlussstück 50 gebildet wird.

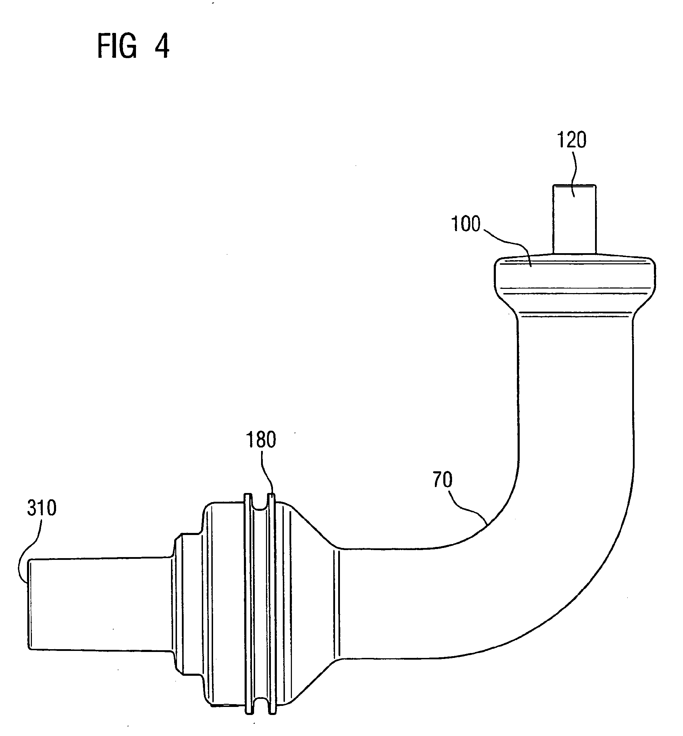

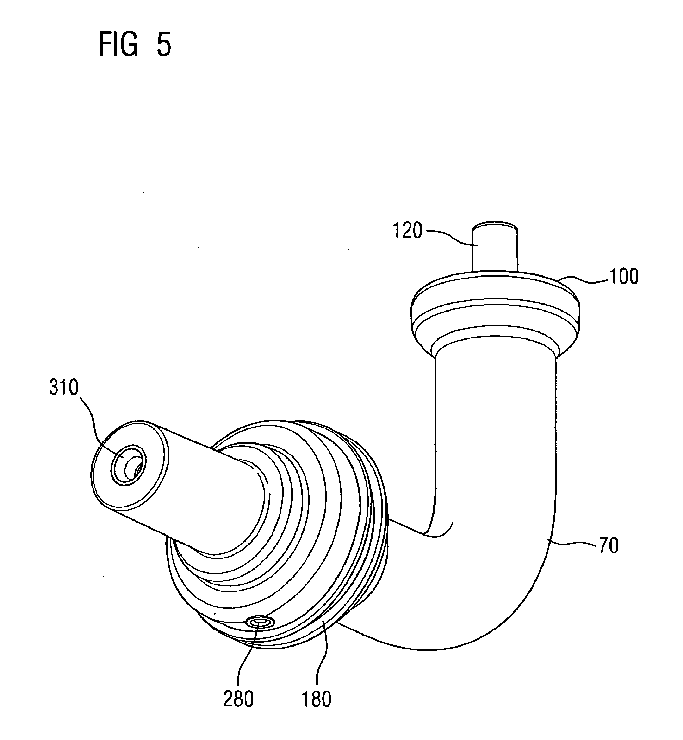

In den Figuren 4 und 5 sind nochmals andere Darstellungen des Anschlussstücks 50 gemaß den Figuren 2 und 3 gezeigt. Dabei zeigt die Figur 4 das Anschlussstück in einer seitlichen Sicht und die Figur 5 das Anschlussstück in einer dreidimensionalen Sicht schräg von der Seite.

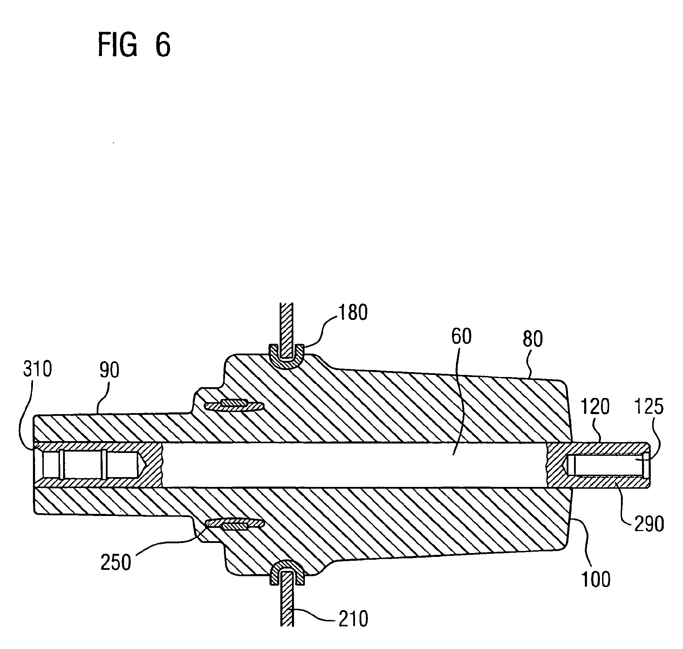

In den Figuren 6 bis 9 ist ein zweites Ausführungsbeispiel für ein Anschlussstück 50 gemäß Figur 1 gezeigt. Dieses Anschlussstück 50 unterscheidet sich von dem ersten Ausführungsbeispiel gemäß den Figuren 2 bis 5 in der Formgestaltung des elektrischen Leiters 60. Bei dem zweiten Ausführungsbeispiel gemäß den Figuren 6 bis 9 ist der elektrische Leiter ungekrümmt bzw. gerade ausgestaltet; ansonsten entspricht das Anschlussstück von seinem technischen Aufbau her im Wesentlichen dem ersten Ausführungsbeispiel: So ist auch das Anschlussstück 50 gemäß dem zweiten Ausführungsbeispiel mit einem gehäusewandseitigen Anschlussbereich 80 ausgestattet, dessen Flanschbereich 100 zur Auflage einer nicht weiter dargestellten ringförmigen Dichtscheibe geeignet ist. Das Leiterende 290 des elektrischen Leiters 60 ist wiederum mit einem Innengewinde 125 ausgestattet, wodurch eine Schraubbefestigung des gehäusewandseitigen Anschlussbereichs 80 an einer Gehäusewand eines Sicherungsgehäuses möglich ist.

Zwischen dem gehäusewandseitigen Anschlussbereich 80 und dem weiteren Anschlussbereich 90 ist ein Befestigungsring 180 angeordnet, der eine Befestigung des Anschlussstücks 50 an nicht weiter dargestellten Befestigungsmitteln 210, beispielsweise einer Montagewand, ermöglicht.

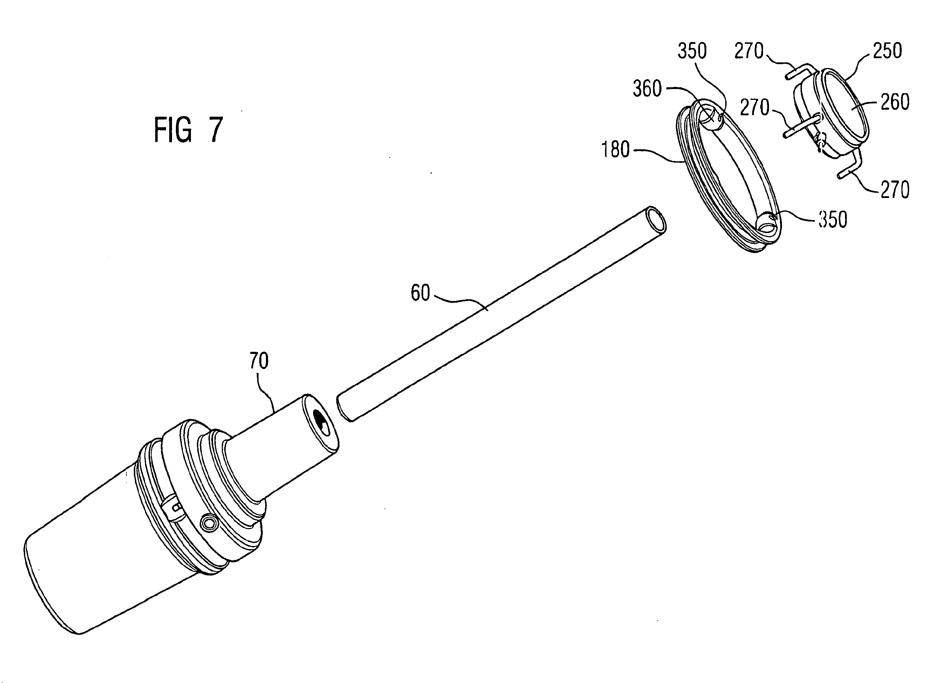

Ein kapazitiver Spannungsteiler 250 weist eine leitfähige Ringelektrode 260 sowie nichtleitfähige Verbindungselemente 270 auf, die in Anschlussabschnitte 360 eines Befestigungsrings 180 eingesteckt sind (vgl. Fig. 7). Die Verbindung zwischen dem Betestigungsring 180 und der leitfähigen Ringelektrode 260 ist in der Figur 7, die die Einzelteile des Anschlussstücks 50 gemäß Figur 6 näher zeigt, im Einzelnen dargestellt.

Der kapazitive Spannungsteiler 250 sowie der Befestigungsring 180 des Anschlussstücks 50 gemäß Figur 6 können mit den entsprechenden Teilen des Anschlussstücks 50 gemäß Figur 3 beispielsweise identisch sein.

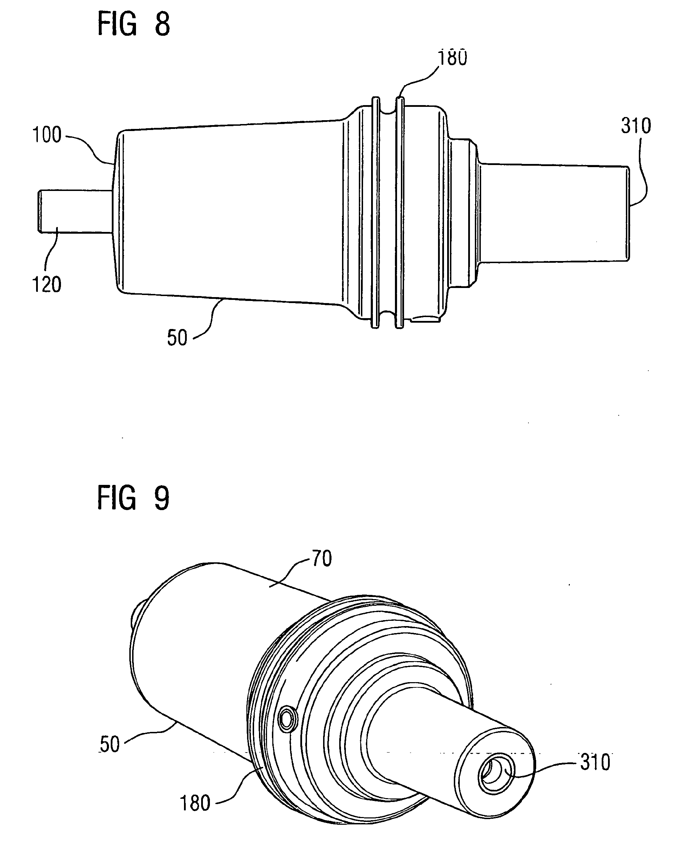

In den Figuren 8 und 9 sind nochmals andere Ansichten des Anschlussstücks 50 gemäß Figur 6 gezeigt. Die Figur 8 stellt das Anschlussstück in einer seitlichen Sicht und die Figur 9 in einer dreidimensionalen Sicht schräg von der Seite dar.

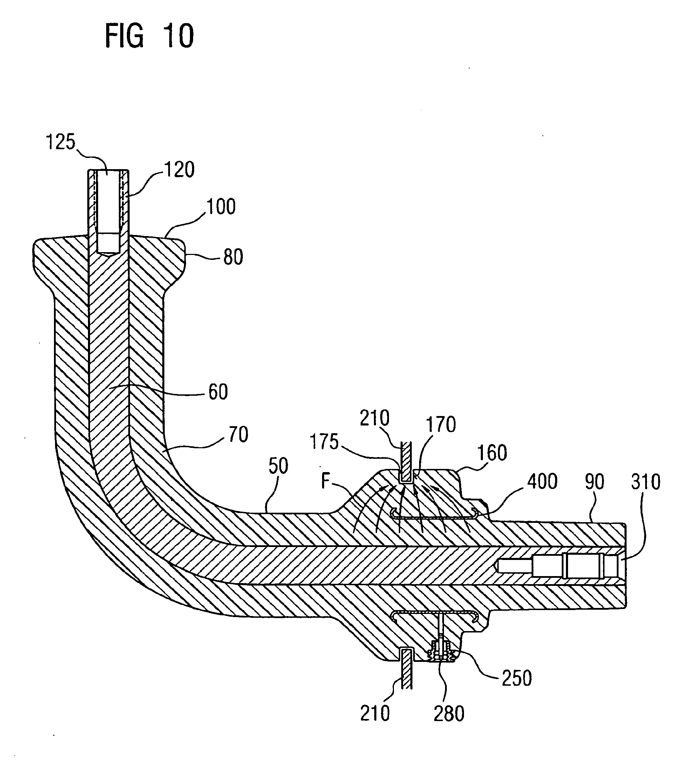

Ein drittes Ausführungsbeispiel für ein Anschlussstück 50 gemäß Figur 1 zeigen die Figuren 10 bis 13. Im Unterschied zu den ersten beiden Ausführungsbeispielen ist bei diesem dritten Ausführungsbeispiel kein Befestigungsring 180 vorhanden. Stattdessen wird der Befestigungsbereich 160 allein durch die Befestigungsnut 170 gebildet, in die ein Befestigungsmittel 210, beispielsweise in Form einer Montagewand, eingeschoben werden kann.

Besteht das Befestigungsmittel 210 nun aus einem elektrisch leitfähigen Material, so könnte es im Falle einer scharfkantigen Ausprägung der Oberfläche des Befestigungsmittels 210 zu einer Feldstärkenerhöhung im Bereich der Kanten des Befestigungsmittels 210 kommen, und zwar auch in dem Luftspalt 175, der zwischen dem Befestigungsmittel 210 und dem Isolationsmaterial 70 zwangsläufig auftritt; dies ist schematisch durch Feldlinien F in der Figur 10 dargestellt. Die elektrischen Feldlinien würden sich bilden, wenn an den elektrischen Leiter 60 des Anschlussstücks 50 eine hohe elektrische Spannung relativ zu dem üblicherweise auf Massepotential liegenden Befestigungsmittel 210 angelegt werden würde.

Um die in der Figur 10 dargestellte Feldlinienausbildung F zu vermeiden, ist der kapazitive Spannungsteiler 250 bei dem Ausführungsbeispiel gemäß Figur 10 anders ausgestaltet und auch anders angeordnet, und zwar derart, dass eine leitfähige Ringelektrode 400 des kapazitiven Spannungsteilers 250 räumlich zwischen dem elektrischen Leiter 60 und der Befestigungsnut 170 bzw. dem Befestigungsbereich 160 angeordnet ist. Durch diese Anordnung der Elektrode 400 wird eine elektrische Abschirmung zwischen dem elektrischen Leiter 60 und dem Befestigungsmittel 210 erreicht, so dass die in der Figur 10 dargestellte Ausbildung der Feldlinien F in dieser Form nicht erfolgen wird, da nämlich die Feldlinien ausgehend von dem elektrischen Leiter 60 auf der Elektrode 400 enden werden und somit nicht in den Bereich der Kanten des Befestigungsmittels 210 vorstoßen können und es somit in dem Luftspalt 175 auch nicht zu einer Feldstärkeerhöhung kommen kann. Der in der Befestigungsnut 170 befindliche Abschnitt des Befestigungsmittels 210 wird somit aufgrund der Positionierung der Elektrode 400 im Wesentlichen feldlinienfrei bleiben.

Im Übrigen, also beispielsweise hinsichtlich der Ausgestaltung des gehäusewandseitigen Anschlussbereichs 80, der Formgebung des Flanschbereichs 100 sowie der Ausgestaltung der Steckerbuchse 310 im weiteren Anschlussbereich 90 kann die Ausgestaltung des Anschlussstücks 50 gemäß Figur 10 beispielsweise dem ersten Ausführungsbeispiel gemäß Figur 2 entsprechen.

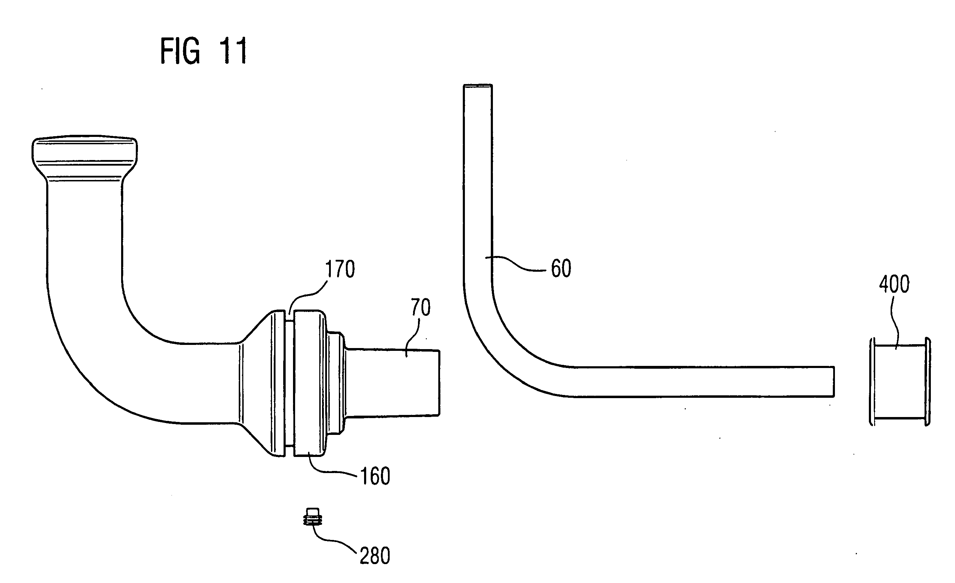

In der Figur 11 sind die Bauteile des Anschlussstücks 50 gemäß Figur 10 nochmals im Detail dargestellt. Es lässt sich erkennen, dass die Elektrode 400 ringförmig ausgebildet ist und konzentrisch um den elektrischen Leiter herum in das Isolationsmaterial 70 eingegossen ist. Außerdem erkennt man den Messanschluss 280, der an die Elektrode 400 angeschlossen ist, um eine elektrische Kontaktierung der Elektrode 400 zu ermöglichen.

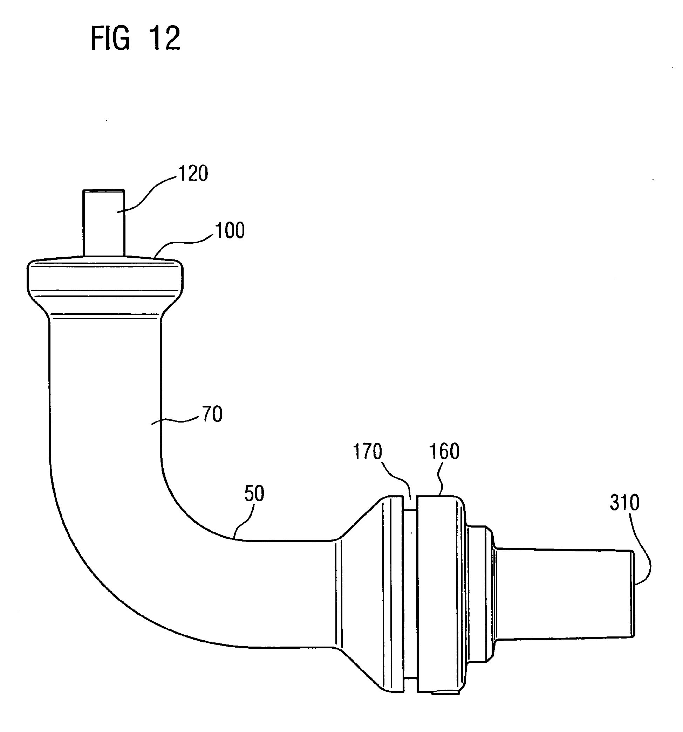

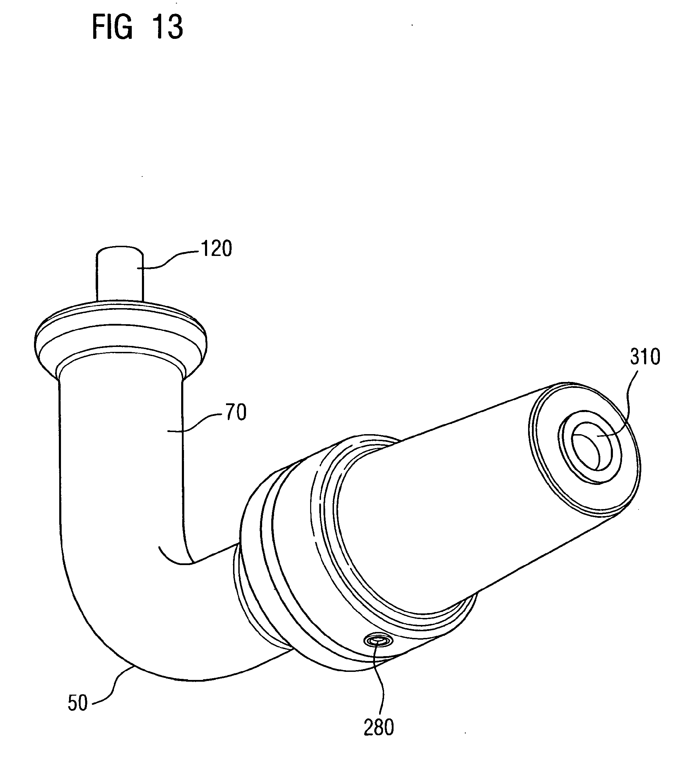

Die Figur 12 zeigt das dritte Ausführungsbeispiel nochmals in einer Sicht von der Seite und die Figur 13 in einer dreidimensionalen Sicht schräg von der Seite.

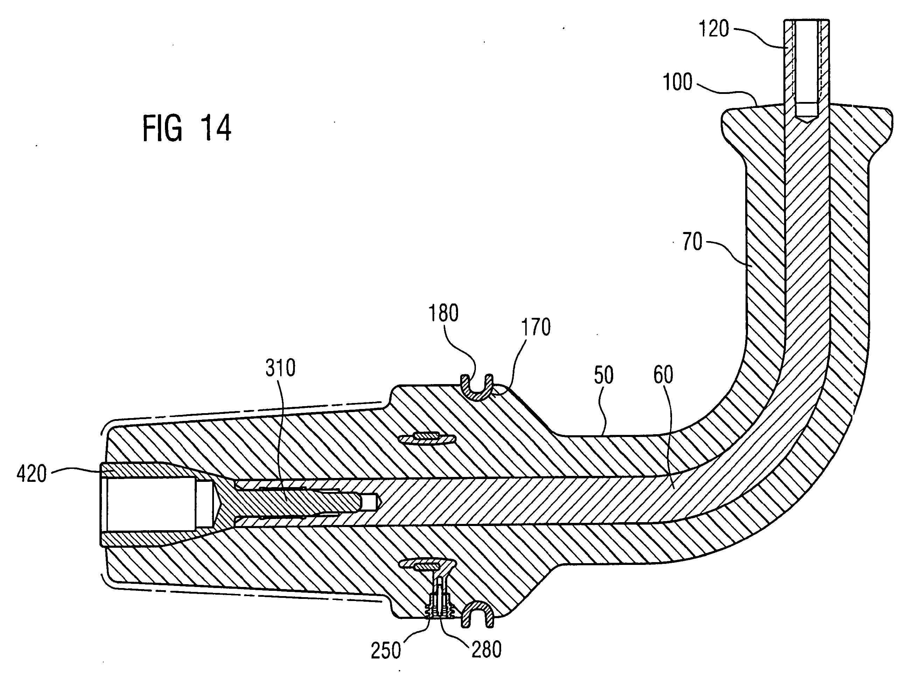

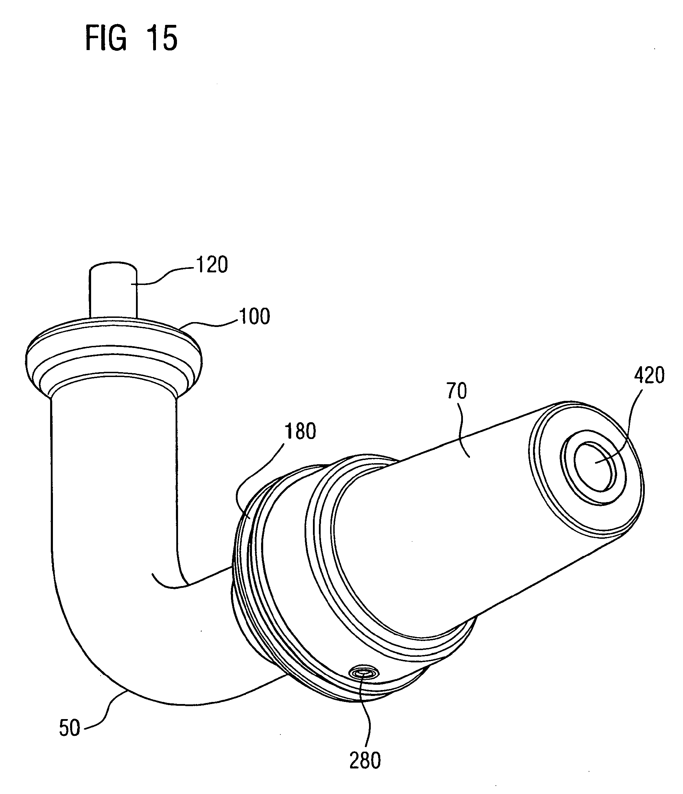

Im Zusammenhang mit den Figuren 14 und 15 wird nun ein viertes Ausführungsbeispiel für ein Anschlussstück 50 gemäß Figur 1 erläutert. In der Figur 14 erkennt man ein Anschlussstück, das im Wesentlichen dem Anschlussstück 50 gemäß Figur 2 und 3 entspricht. Im Unterschied zu diesem ersten Ausführungsbeispiel ist bei dem vierten Ausführungsbeispiel während des Vergießens des elektrischen Leiters 60, des kapazitiven Spannungsteilers 250 sowie des Befestigungsrings 180 mit dem Verguss- bzw. Isolationsmaterial 70 noch ein Adapterstück 420 vorgesehen. Dieses Adapterstück 420 wird in die Steckerbuchse 310 am Leiterende 300 eingesteckt oder eingeschraubt, bevor die genannten Komponenten 60, 250, 180 sowie 420 mit dem Isolationsmaterial 70 vergossen werden. Dies führt dazu, dass das Adapterstück 420 in das Anschlussstück 50 vollständig integriert wird.

Das Adapterstück 420 hat die Aufgabe, eine Steckeranpassung des Adapterstückes 50 an andere Steckernormen als die der Steckerbuchse 310 zu ermöglichen. Das Adapterstück 420 wird während der Herstellung des Anschlussstücks 50 also stets dann auf die bzw. in die Steckerbuchse 310 eingeführt, wenn bereits vor der Herstellung des Anschlussstücks 50 bekannt ist, dass benutzerseitig eine andere Steckernorm als diejenige verwendet wird, die durch die Steckerbuchse 310 selbst bereitgestellt werden würde. Durch das bereits bei der Herstellung des Anschlussstücks 50 vorgesehen Bereitstellen des Adapterstücks 420 und das Eingießen des Adapterstücks 420 in das Isolationsmaterial 70 ist sichergestellt, dass eine mechanisch sowie auch elektrisch sichere Anbindung anderer Steckernormen an das Anschlussstück 50 möglich wird, als dies allein durch die Steckerbuchse 310 ermöglicht werden würde. Das Vorsehen des Adapterstücks 420 bereits bei der Herstellung des Anschlussstücks erhöht die Flexibilität und reduziert die Kosten bei der Anpassung des Anschlussstücks 50 an benutzerseitig vorgegebene Anschlussnormen.

In der Figur 15 ist das vierte Ausführungsbeispiel gemäß Figur 14 mit dem integrierten bzw. vergossenen Adapterstück 420 nochmals in einer dreidimensionalen Sicht schräg von der Seite gezeigt. Man erkennt, dass der durch das Adapterstück 420 gebildete Steckeranschlussbereich anders ausgestaltet und anders ausgeformt ist als bei der Steckerbuchse 310 gemäß den ersten drei Ausführungsbeispielen gemäß den Figuren 2 bis 13.

### Bezugszeichen

- 1: Schaltanlage
- 2: Sicherungsgehäuse bzw. -anbau
- 3: Sicherung
- 4: Anschlussdurchführung
- 5: vordere Anschlussdurchführung
- 6: hintere Anschlussdurchführung
- 7: Stromschiene
- 8: Anlagenbehälter
- 9: Kabelanschlussraum
- 10,10',10": Schaltelemente
- 11,13,14: weitere Elemente
- 15: Verschienungen
- 16: schaltbare Verbindung
- 17: Schaltkontakt
- 20: elektrische Durchführungen
- 30: Verschlussdeckel
- 50: Anschlussstück
- 60: Leiter
- 70: Isolationsmaterial
- 80: Anschlussbereich
- 90: Anschlussbereich
- 100: Flanschbereich
- 110: Dichtscheibe
- 120: Bolzen
- 125: Innengewinde
- 130: Gehäusewand
- 160: Befestigungsbereich
- 170: Nut
- 175: Luftspalt
- 180: Befestigungsring
- 190: Bodenbereich
- 200: Öffnungsbereich
- 210: Befestigungsmittel
- 250: Spannungsteiler
- 260: Ringelektrode
- 270: Verbindungselement
- 280: Messanschluss
- 290,300: Leiterende
- 310: Steckerbuchse
- 350: Loch
- 360: Anschlussabschnitte
- 400: Ringelektrode
- 420: Adapterstück

## Patentansprüche

1. Anschlussstück (50) mit einem elektrischen Leiter (60) zum Anbringen an einer Gehäusewand (130) eines Sicherungsgehäuses (2) einer elektrischen Schaltanlage (1) und zum elektrischen Durchführen des elektrischen Leiters durch die Gehäusewand, wobei das Anschlussstück einen gehäusewandseitigen Anschlussbereich (80) und einen vom gehäusewandseitigen Anschlussbereich beabstandeten weiteren Anschlussbereich (90) aufweist,
**dadurch gekennzeichnet, dass**
der gehäusewandseitige Anschlussbereich derart symmetrisch ausgestaltet ist, dass bei der Montage des Anschlussstücks an der Gehäusewand zumindest zwei unterschiedliche Ausrichtungen des Anschlussstücks durch Drehen um eine Achse senkrecht zur Gehäusewand möglich sind, wobei das Anschlussstück zwischen seinem gehäusewandseitigen Anschlussbereich und seinem weiteren Anschlussbereich einen Befestigungsbereich (160) aufweist, der eine Befestigung des Anschlussstücks mit einem außerhalb des Sicherungsgehäuses angeordneten Befestigungsmittel (210) ermöglicht.

2. Anschlussstück nach Anspruch 1,
**dadurch gekennzeichnet, dass**
der gehäusewandseitige Anschlussbereich rotationssymmetrisch ausgestaltet ist und bei der Montage des Anschlussstücks an der Gehäusewand eine beliebige Ausrichtung des Anschlussstücks durch Drehen um die Achse senkrecht zur Gehäusewand möglich ist.

3. Anschlussstück nach einem der voranstehenden Ansprüche,
**dadurch gekennzeichnet, dass**
- der Anschlussbereich einen Flanschbereich (100) aus elektrisch isolierendem Material zur Auflage einer ringförmigen Dichtscheibe (110) aufweist und
- der elektrische Leiter an seinem gehäusewandseitigen Leiterende einen vom Flanschbereich herausstehenden Bolzen (120) mit einem Gewinde (125) aufweist.

4. Anschlussstück nach Anspruch 3,
**dadurch gekennzeichnet, dass**
der Bolzen mittig im Flanschbereich angeordnet ist und derart dimensioniert ist, dass die ringförmige Dichtscheibe auf den Bolzen aufsteckbar ist.

5. Anschlussstück nach einem der vorangehenden Ansprüche,
**dadurch gekennzeichnet, dass**
der Befestigungsbereich eine Nut (170) aufweist, die ringförmig, zumindest in einem Ringabschnitt, um den elektrischen Leiter herum angeordnet ist.

6. Anschlussstück nach Anspruch 5,
**dadurch gekennzeichnet, dass**
in der Nut ein Befestigungsring (180) oder Befestigungsringsegment eingelegt ist, dessen dem elektrischen Leiter zugewandter Innenringbereich eine gewölbte Oberfläche aufweist.

7. Anschlussstück nach Anspruch 6,
**dadurch gekennzeichnet, dass**
der Krümmungsradius der gewölbten Oberfläche in dem Innenringbereich zumindest 1 mm beträgt.

8. Anschlussstück nach einem der voranstehenden Ansprüche 6-7,
**dadurch gekennzeichnet, dass**
der Befestigungsring oder das Befestigungsringsegment einen U-förmigen Querschnitt aufweist, wobei der Bodenbereich (190) des U-förmigen Querschnitts dem elektrischen Leiter zugewandt und der Öffnungsbereich (200) des U-förmigen Querschnitts dem elektrischen Leiter abgewandt ist.

9. Anschlussstück nach einem der voranstehenden Ansprüche 5-8,
**dadurch gekennzeichnet, dass**
in dem Anschlussstück eine Elektrode (260) eines kapazitiven Spannungsteilers (250) enthalten ist.

10. Anschlussstück nach Anspruch 9,
**dadurch gekennzeichnet, dass**
der kapazitive Spannungsteiler eine leitfähige Ringelektrode (260) und damit verbundene nichtleitfähige Verbindungselemente (270) aufweiset, die mit dem Befestigungsring oder dem Befestigungsringsegment verbunden sind.

11. Anschlussstück nach Anspruch 10,
**dadurch gekennzeichnet, dass**
der Befestigungsring oder das Befestigungsringsegment zumindest einen Anschlussabschnitt (360) mit einem Loch (350) aufweist, in das eines der nichtleitfähigen Verbindungselemente eingesteckt ist.

12. Anschlussstück nach Anspruch 11,
**dadurch gekennzeichnet, dass**
das zumindest eine Loch und die nichtleitfähigen Verbindungselemente in ein Isolationsmaterial (70) des Anschlussstücks eingegossen sind.

13. Anschlussstück nach einem der voranstehenden Ansprüche 5-12,
**dadurch gekennzeichnet, dass**
die Elektrode (400) des kapazitiven Spannungsteilers räumlich zwischen der Nut und dem elektrischen Leiter angeordnet ist und den elektrischen Leiter von der Nut elektrisch abschirmt.

14. Anschlussstück nach einem der voranstehenden Ansprüche 6-13,
**dadurch gekennzeichnet, dass**
der Befestigungsring oder das Befestigungsringsegment elektrisch leitfähig ist.

15. Anschlussstück nach einem der voranstehenden Ansprüche,
**dadurch gekennzeichnet, dass**
der elektrische Leiter des Anschlussstücks gerade ist.

16. Anschlussstück nach einem der voranstehenden Ansprüche,
**dadurch gekennzeichnet, dass**
der elektrische Leiter des Anschlussstücks um 90 Grad gebogen ist.

17. Sicherungsgehäuse, insbesondere Sicherungsanbau für eine elektrische Schaltanlage (1), mit Anschlussdurchführungen (4, 5, 6), von denen zumindest eine mit einem Anschlussstück gemäß einem der voranstehenden Ansprüche ausgestattet ist.

18. Elektrische Schaltanlage (1) mit einem Sicherungsgehäuse, insbesondere Sicherungsanbau, mit Anschlussdurchführungen (4, 5, 6), von denen zumindest eine mit einem Anschlussstück gemäß einem der voranstehenden Ansprüche 1-16 ausgestattet ist.

19. Elektrische Schaltanlage nach Anspruch 18,
**dadurch gekennzeichnet, dass**
das Sicherungsgehäuse drei Anschlussdurchführungen (4, 5, 6) aufweist, nämlich eine abgangsseitige Anschlussdurchführung (4), an die ein Anschlussstück nach einem der Ansprüche angeschlossen ist, sowie einer vorderen und einer hinteren Anschlussdurchführung zum Anschluss an einen Anlagenbehälter der Schaltanlage.

20. Elektrische Schaltanlage nach Anspruch 19,
**dadurch gekennzeichnet, dass**
die vordere oder die hintere Anschlussdurchführung mit der abgangsseitigen Anschlussdurchführung mittels einer Stromschiene (7) elektrisch in Verbindung steht.

21. Elektrische Schaltanlage nach Anspruch 20,
**dadurch gekennzeichnet, dass**
die vordere oder die hintere Anschlussdurchführung einen Erdungskontakt eines Erdungsschalters trägt.

22. Verfahren zum Herstellen eines Anschlussstücks nach einem der vorangehenden Ansprüche 1-16, wobei bei dem Verfahren
- an dem dem gehäusewandseitigen Leiterende (290) abgewandten anderen Leiterende (300) des elektrischen Leiters ein Adapterstück (420) angebracht wird und
- der elektrische Leiter gemeinsam mit dem Adapterstück (420) mit einem Isolationsmaterial des Anschlussstücks vergossen wird.

## Claims

1. Connecting piece (50) having an electrical conductor (60) for fitting to a housing wall (130) of a fuse housing (2) of an electrical switchgear assembly (1) and for electrical bushing of the electrical conductor through the housing wall, with the connecting piece having a connecting area (80) on the housing wall side and a further connecting area (90) which is at a distance from the connecting area on the housing wall side,
**characterized in that**
the connecting area on the housing wall side is designed to be symmetrical such that, when the connecting piece is being fitted to the housing wall, at least two different alignments of the connecting piece are possible by rotation about an axis at right angles to the housing wall, with the connecting piece having an attachment area (160) between its connecting area on the housing wall side and its further connecting area, which attachment area (160) allows the connecting piece to be attached by an attachment means (210) which is arranged outside the fuse housing.

2. Connecting piece according to Claim 1,
**characterized in that**
the connecting area on the housing wall side is designed to be rotationally symmetrical and, when the connecting piece is being fitted to the housing wall, any desired alignment of the connecting piece is possible by rotation about the axis at right angles to the housing wall.

3. Connecting piece according to one of the preceding claims, **characterized in that**
- the connecting area has a flange area (100) composed of electrically insulating material for an annular sealing washer (110) to rest on, and
- at its conductor end on the housing wall side, the electrical conductor has a bolt (120) which projects from the flange area and has a thread (125).

4. Connecting piece according to Claim 3,
**characterized in that**
the bolt is arranged centrally in the flange area and is of such a size that the annular sealing washer can be plugged onto the bolt.

5. Connecting piece according to one of the preceding claims, **characterized in that**
the attachment area has a groove (170) which is arranged in an annular shape, at least in a ring section, around the electrical conductor.

6. Connecting piece according to Claim 5,
**characterized in that**
an attachment ring (180) or attachment ring segment is inserted in the groove and its internal ring area facing the electrical conductor has a curved surface.

7. Connecting piece according to Claim 6,
**characterized in that**
the radius of curvature of the curved surface in the internal ring area is at least 1 mm.

8. Connecting piece according to one of the preceding Claims 6-7,
**characterized in that**
the attachment ring or the attachment ring segment has a U-shaped cross section, with the bottom area (190) of the U-shaped cross section facing the electrical conductor, and with the opening area (200) of the U-shaped cross section facing away from the electrical conductor.

9. Connecting piece according to one of the preceding Claims 5-8,
**characterized in that**
the connecting piece contains an electrode (260) of a capacitive voltage divider (250).

10. Connecting piece according to Claim 9,
**characterized in that**
the capacitive voltage divider has a conductive ring electrode (260) and non-conductive connection elements (270) which are connected to it and are connected to the attachment ring or to the attachment ring segment.

11. Connecting piece according to Claim 10,
**characterized in that**
the attachment ring or the attachment ring segment has at least one connecting section (360) with a hole (350) into which one of the non-conductive connection elements is inserted.

12. Connecting piece according to Claim 11,
**characterized in that**
the at least one hole and the non-conductive connection elements are encapsulated in an insulation material (70) of the connecting piece.

13. Connecting piece according to one of the preceding Claims 5-12,
**characterized in that**
the electrode (400) of the capacitive voltage divider is physically arranged between the groove and the electrical conductor and electrically shields the electrical conductor from the groove.

14. Connecting piece according to one of the preceding Claims 6-13,
**characterized in that**
the attachment ring or the attachment ring segment is electrically conductive.

15. Connecting piece according to one of the preceding claims,
**characterized in that**
the electrical conductor of the connecting piece is straight.

16. Connecting piece according to one of the preceding claims,
**characterized in that**
the electrical conductor of the connecting piece is bent through 90°.

17. Fuse housing, in particular a fuse fitting, for an electrical switchgear assembly (1) with connecting bushings (4, 5, 6), at least one of which is equipped with a connecting piece according to one of the preceding claims.

18. Electrical switchgear assembly (1) having a fuse housing, in particular a fuse fitting, with connecting bushings (4, 5, 6), at least one of which is equipped with a connecting piece according to one of the preceding Claims 1-16.

19. Electrical switchgear assembly according to Claim 18,
**characterized in that**
the fuse housing has three connecting bushings (4, 5, 6), specifically a connecting bushing (4) on the outgoer-side, to which a connecting piece according to one of the claims is connected, as well as a front and a rear connecting bushing for connection to an assembly container of the switchgear assembly.

20. Electrical switchgear assembly according to Claim 19,
**characterized in that**
the front or the rear connecting bushing is electrically connected to the outgoer-side connecting bushing by means of a busbar (7).

21. Electrical switchgear assembly according to Claim 20,
**characterized in that**
the front or the rear connecting bushing is fitted with a grounding contact of a grounding switch.

22. Method for production of a connecting piece according to one of the preceding Claims 1-16, wherein, in the case of the method,
- an adapter piece (420) is fitted to the other conductor end (300), facing away from the conductor end (290) on the housing wall side, of the electrical conductor, and
- the electrical conductor together with the adapter piece (420) is encapsulated with an insulation material of the connecting piece.

## Revendications

1. Pièce ( 50 ) de raccordement ayant un conducteur ( 60 ) électrique pour l'application à une paroi ( 130 ) d'un coffret ( 2 ) de fusible d'une installation ( 1 ) de distribution électrique et pour le passage électrique du conducteur électrique à travers la paroi du coffret, dans laquelle la pièce de raccordement a une partie ( 80 ) de raccordement du côté de la paroi du coffret et une autre partie ( 90 ) de raccordement à distance de la partie de raccordement du côté de la paroi du coffret, **caractérisée en ce que** la partie du raccordement du côté de la paroi du coffret est symétrique de manière à ce que, lorsque la pièce de raccordement est montée sur la paroi du coffret, au moins deux orientations différentes de la pièce de raccordement sont rendues possibles par rotation autour d'un axe perpendiculairement à la paroi du coffret, la pièce de raccordement ayant, entre sa partie de raccordement du côté de la paroi du coffret et son autre partie de raccordement, une partie ( 160 ) de fixation qui rend possible une fixation de la pièce de raccordement par un moyen ( 210 ) de fixation disposé à l'extérieur du boîtier de fusible.

2. Pièce de raccordement suivant la revendication 1,
**caractérisée en ce que**
la partie de raccordement du côté de la paroi du coffret est de révolution et, lorsque la pièce de raccordement est montée sur la paroi du coffret, n'importe quelle orientation de la pièce de raccordement est possible perpendiculairement à la paroi du coffret par rotation autour de l'axe.

3. Pièce de raccordement suivant l'une des revendications précédentes,
**caractérisée en ce que**
- la partie de raccordement comporte une partie ( 100 ) de bride en un matériau isolant du point de vue électrique pour l'application d'une rondelle ( 110 ) d'étanchéité annulaire et
- le conducteur électrique a, à son extrémité du côté de la paroi du coffret, une cheville ( 120 ) en saillie de la partie de bride et ayant un filetage ( 125 ).

4. Pièce de raccordement suivant la revendication 3,
**caractérisée en ce que**
la cheville est disposée au milieu dans la partie de bride et a des dimensions telles que la rondelle d'étanchéité annulaire peut être enfilée sur la cheville.

5. Pièce de raccordement suivant l'une des revendications précédentes,
**caractérisée en ce que**
la partie de fixation a une rainure ( 170 ) qui est disposée annulairement au moins dans un segment annulaire autour du conducteur électrique.

6. Pièce de raccordement suivant la revendication 5,
**caractérisée en ce que**
dans la rainure est insérée une bague ( 180 ) de fixation ou un segment de bague de fixation, dont la partie annulaire intérieure tournée vers le conducteur électrique a une surface concave.

7. Pièce de raccordement suivant la revendication 6,
**caractérisée en ce que**
le rayon de courbure de la surface concave dans la partie annulaire intérieure est d'au moins un millimètre.

8. Pièce de raccordement suivant l'une des revendications précédentes 6 à 7,
**caractérisée en ce que**
la bague de fixation ou le segment de bague de fixation a une section transversale en forme de U, la partie ( 190 ) de fond de la partie transversale en forme de U étant tournée vers le conducteur électrique et la partie ( 200 ) d'ouverture de la section transversale en forme de U étant éloignée du conducteur électrique.

9. Pièce de raccordement suivant l'une des revendications précédentes 5 à 8,
**caractérisée en ce qu'**une électrode ( 260 ) d'un diviseur ( 250 ) de tension capacitif est contenue dans la pièce de raccordement.

10. Pièce de raccordement suivant la revendication 9,
**caractérisée en ce que**
le diviseur de tension capacitif comporte une électrode ( 260 ) annulaire conductrice et des éléments ( 270 ) de liaison non conducteurs ainsi reliés, qui sont reliés à la bague de fixation ou au segment de bague de fixation.

11. Pièce de raccordement suivant la revendication 10,
**caractérisée en ce que**
la bague de fixation ou le segment de bague de fixation a au moins un tronçon ( 360 ) de raccordement ayant un trou ( 350 ) dans lequel l'un des éléments de liaison non conducteurs est enfilé.

12. Pièce de raccordement suivant la revendication 11,
**caractérisée en ce que**
le au moins un trou et les éléments de liaison non conducteurs sont coulés dans un matériau ( 70 ) isolant de la pièce de raccordement.

13. Pièce de raccordement suivant l'une des revendications précédentes 5 à 12,
**caractérisée en ce que**
l'électrode ( 400 ) du diviseur de tension capacitif est disposée dans l'espace entre la rainure et le conducteur électrique et blinde électriquement le conducteur électrique par rapport à la rainure.

14. Pièce de raccordement suivant l'une des revendications précédentes 6 à 13,
**caractérisée en ce que**
la bague de fixation ou le segment de bague de fixation est conducteur du point de vue électrique.

15. Pièce de raccordement suivant l'une des revendications précédentes,
**caractérisée en ce que**
le conducteur électrique de la pièce de raccordement est droit.

16. Pièce de raccordement suivant l'une des revendications précédentes,
**caractérisée en ce que**
le conducteur électrique de la pièce de raccordement est coudé à 90 degrés.

17. Coffret de fusible, notamment rapporté, pour une installation ( 1 ) de distribution électrique, comprenant des traversées ( 4, 5, 6 ) de raccordement dont l'une au moins est équipée d'une pièce de raccordement suivant l'une des revendications précédentes.

18. Installation ( 1 ) de distribution électrique, comprenant un coffret de fusible, notamment rapporté, comprenant des traversées ( 4, 5, 6 ) de raccordement, dont l'une au moins est équipée d'une pièce de raccordement suivant l'une des revendications précédentes 1 à 16.

19. Installation de distribution électrique suivant la revendication 18,
**caractérisée en ce que**
le coffret de fusible a trois traversées ( 4, 5, 6 ) de raccordement, à savoir, une traversée ( 4 ) de raccordement du côté de la sortie, à laquelle une pièce de raccordement suivant l'une des revendications précédentes 1 à 16 est raccordée, ainsi qu'une traversée de raccordement avant et une traversée de raccordement arrière pour le raccordement à un récipient de l'installation de distribution.

20. Installation de distribution électrique suivant la revendication 19,
**caractérisée en ce que**
la traversée de raccordement avant ou la traversée de raccordement arrière est en liaison électrique avec la traversée de raccordement du côté de la sortie au moyen d'une barre ( 7 ) de courant.

21. Installation de distribution électrique suivant la revendication 20,
**caractérisée en ce que**
la traversée de raccordement avant ou la traversée de raccordement arrière porte un contact de mise à la terre d'un interrupteur de mise à la terre.

22. Procédé de fabrication d'une pièce de raccordement suivant l'une des revendications précédentes 1 à 16, procédé dans lequel
- on met une pièce ( 420 ) d'adaptateur à l'autre extrémité ( 300 ) du conducteur électrique, éloignée de l'extrémité ( 290 ) du conducteur du côté de la paroi du coffret et
- on scelle le conducteur électrique ensemble avec la pièce ( 420 ) d'adaptateur par une matière isolante de la pièce de raccordement.
